# FASCICULE DE BREVET EUROPEEN

(11) **EP 0 949 870 B1**
(45) Date de publication et mention de la délivrance du brevet: **29.05.2002**
(21) Numéro de dépôt: 97952922.9
(22) Date de dépôt: 28.11.1997
(51) Int. Cl.: A23C 19/032, A23C 19/076

(54) **FROMAGE FRAIS**
QUARK
FRESH CHEESE

(30) Priorité: 23.12.1996 EP 96203683
(43) Date de publication de la demande: 20.10.1999
(73) Titulaire: SOCIETE DES PRODUITS NESTLE S.A., 1800 Vevey (CH)
(72) Inventeur: PARMANTIER, Claude, F-14100 Glos (FR); DESACHY, Patrice, CH-1009 Pully (CH)
(74) Mandataire: Archambault, Jean
(86) Numéro de dépôt international: EP9706947
(87) Numéro de publication internationale: WO9827825

(56) Documents cités:
- EP-A- 0 038 940
- EP-A- 0 617 899
- WO-A-95/14389
- US-A- 4 434 184
- US-A- 5 578 302
- SHAH N ET AL: "RENNET EFFECTS AND PARTITIONING OF BACTERIAL CULTURES DURING QUARG CHEESE MANUFACTURE" JOURNAL OF FOOD SCIENCE, vol. 55, no. 2, 1 mars 1990, pages 398-400, 454, XP000126290 cité dans la demande
- DATABASE FSTA INTERNATIONAL FOOD INFORMATION SERVICE (IFIS), FRANFURT/MAIN, DE AN=84-12-p2444, E. BOGDANOVA: "Acidophilus tvorog" XP002062103 & MOLOCHNAYA PROMYSHLENNOST , no. 11, 1983, pages 18-19,
- J. RASIC: "Yogurt and yogurt cheese manufacture" CULTURED DAIRY PRODUCTS JOURNAL, vol. 22, no. 4, 1987, pages 6-8, XP000671878 cité dans la demande
- V. WOLPERT: "Skyr and skyrwhey" MILK INDUSTRY , vol. 90, no. 3, 1988, page 29 XP002062102 cité dans la demande
- CHEMICAL ABSTRACTS, vol. 91, no. 7, 1979 Columbus, Ohio, US; abstract no. 54929g, page 544; XP002030337 & PL 95 218 A (W. BEDNARSKI)

## Description

La présente invention a pour objet un nouveau fromage frais contenant des bactéries lactiques thermophiles, ainsi qu'un procédé pour le préparer.

### État de la technique

Les fromages frais non-affinés englobent de nombreux types de produits connus sous diverses dénominations selon les régions ou pays. Dans les pays anglosaxons, il est de question de "quarg" ou de "cottage-cheese". En Allemagne, on utilise plutôt le nom de "quark". On connaît encore des fromages de ce type dans les pays scandinaves sous le nom de "viili". On rencontre aussi des produits analogues en Grèce ou dans les Balkans, ces produits étant notamment apparentés aux yoghourts égouttés.

Dans la fabrication traditionnelle de fromage frais, on inocule un lait pasteurisé avec une culture de bactéries lactiques mésophiles se développant de préférence à basse température, on ajoute éventuellement de la présure, et on incube le lait entre 18°C et 35°C pour obtenir un caillé essentiellement lactique baignant dans du lactosérum, c'est à dire un caillé ferme friable, poreux et peu contractile. Puis, on sépare le lactosérum par centrifugation, par ultrafiltration ou par égouttage au travers d'un filtre, et on récupère le caillé auquel on peut ajouter de la matière grasse et/ou des aromates (Veisseyre, Technologie du Lait, Ed. La Maison Rustique, Paris, pages 428-429, 604-609, 1975, I.S.B.N. 2-7066-0018-7).

Lors de la préparation d'un fromage frais, la séparation du lactosérum par centrifugation est conditionnée par l'existence d'un écart suffisant entre la densité du caillé et celle du lactosérum. De plus, la texture du caillé doit être telle qu'elle ne colle pas dans la centrifugeuse (Veisseyre, Technologie du Lait, Ed. La Maison Rustique, Paris, p.608, 1975, I.S.B.N. 2-7066-0018-7).

La thermo-sensibilité des protéines de lait peut être aussi mise à profit, avant de séparer le lactosérum, pour augmenter dans le caillé la teneur en matière sèche. Pour ce faire, le lait caillé acide obtenu après l'acidification lactique est simplement chauffé à 55-75°C durant quelques minutes, puis refroidi à environ 40°C. Ce traitement thermique permet en fait de modifier la structure des particules de protéines formant le caillé, permettant ainsi une meilleure séparation du lactosérum (FR2361823; Tatini *et al.,* J. Dairy Science, 56, 815-825, 1971; A. Eck, Le Fromage, Ed. Lavoisier, Paris, pages 220-226, 1984, I.S.B.N. 2-85206218-6).

Ce traitement thermique pose cependant d'autres problèmes. En effet, le fromage frais ne contient quasiment plus de bactéries lactiques vivantes, ce qui pose ensuite des problèmes de stabilité face aux contaminants bactériens et fongiques. Pour pallier cet inconvénient, l'industrie fromagère généralement enrichit le fromage frais, dont le caillé a été chauffé, avec une culture fermentée de bactéries lactiques. A titre d'indication on peut citer les procédés décrits par FR2361823 (Westfalia), WO94/26124 (I.N.R.A.), EP196436 (S.P.N.), FR2342666 (Fanni *et al*.) et US4191782, par exemple.

A la lecture de la littérature, il est intéressant de remarquer que, dans la plupart des cas, l'industrie fromagère utilise uniquement des bactéries lactiques mésophiles pour la préparation d'un fromage frais centrifugé. Ces bactéries ont une croissance optimale à 18-35°C, elles sont rarement filantes ou très texturantes, et on dénombre parmi celles-ci les espèces *Leuconostoc citrovorum, Lactococcus lactis* subsp. *lactis, Streptococcus cremoris, Streptococcus lactis, Streptococcus diacetylactis, Lactobacillus casei* subsp. *casei* et *Lactobacillus sake,* par exemple.

Quelques tentatives ont été faites pour fabriquer industriellement un fromage frais, qui est fermenté par des bactéries lactiques thermophiles, puis centrifugé. Ces bactéries lactiques ont une croissance optimale à 35-45°C, elles sont, le plus souvent, filantes et/ou texturantes, et on dénombre parmi celles-ci les espèces *Streptococcus thermophilus, Lactobacillus delbruecki* subsp. *bulgaricus, Lactobacillus johnsonii, Lactobacillus acidophilus* et *Lactobacillus helveticus,* par exemple. Malheureusement, comme illustré ci-après, l'utilisation industrielle de bactéries lactiques thermophiles pose des problèmes lors de la séparation du lactosérum par centrifugation, car la densité du caillé et celle du lactosérum ne présentent pas un écart suffisant, et/ou le caillé présente une texture collante (Veisseyre, Technologie du Lait, p.608). On perd ainsi une partie substantielle des solides du lait dans le lactosérum.

Par exemple, FR2354711 (Unilever) et EP144274 (J.-C. Pailler) proposent ainsi de premièrement concentrer un lait pasteurisé, puis deuxièmement de fermenter ce lait concentré par des bactéries lactiques thermophiles. Cependant cette base fromagère n'est pas satisfaisante du point de vue organoleptique.

De même, EP38940 (S.P.N.) propose un procédé de fabrication d'un fromage tartinable dans lequel, on forme un caillé par une coagulation avec des bactéries lactiques thermophiles en présence de présure, à un pH compris entre 5 et 5,3, et on égoutte le caillé par centrifugation. Malheureusement, si la coagulation intervient entre pH 5 et 5,3, et si l'on n'ajoute pas de sel, alors la texture obtenue est granuleuse.

V. M. Wolpert propose également un autre procédé dans lequel, on fermente un lait écrémé pasteurisé avec des bactéries lactiques thermophiles en présence de présure à 40°C jusqu'à pH 4,65, on laisse le lait caillé s'acidifier à 17°C pendant 16-18 h jusqu'à un pH de 4, on retire le lactosérum par centrifugation, on ultrafiltre le lactosérum pour récupérer les solides de lait qui n'avaient pas été précipités lors de la centrifugation, et on incorpore le rétentat dans le caillé de sorte à obtenir un fromage frais ayant une teneur standard en matière sèche (Milk Industry UK, 90, N°3, p.29, 1988).

On peut également remarquer les travaux de Shah *et al.* qui ont analysé l'effet de la présure sur la formation d'un caillé. Pour cela, ils ont fermenté un lait par des bactéries lactiques thermophiles jusqu'à un pH de 4,5 en présence de présure, puis ils ont précipité la plupart des solides de lait à l'aide d'une centrifugeuse de laboratoire fonctionnant à 2000 g pendant 10 min (J. Food Science, 55, 398-454, 1990). Le caillé ainsi obtenu présente cependant une texture très compacte, du fait de la centrifugation poussée des solides du lait, qui le distingue ainsi des fromages frais retrouvés dans le commerce ayant une texture lisse.

En conclusion, pour fabriquer industriellement un fromage frais ayant une teneur élevée en matière sèche, on recourt rarement à des bactéries lactiques thermophiles, sauf dans le cas où l'on ultrafiltre ou l'on égoutte simplement le caillé (voir J. L. Rasic, Cultures Dairy Products Journal, 22, p. 6-8, 1987; WO9514389; EP617899). En effet, la grande majorité des bactéries lactiques thermophiles donne un caillé qui se prête mal à une centrifugation industrielle, car la quantité de solides de lait retrouvée dans le lactosérum dépasse les normes acceptables. Pour pallier cet inconvénient l'industrie fromagère recourt classiquement à une ultrafiltration du lactosérum, comme illustré ci-dessus par V. M. Wolpert, et/ou à un chauffage du lait caillé à 55-75°C, comme illustré ci-dessus par Tatini *et al*..

Il n'a jamais été proposé d'utiliser une classe particulière de bactéries lactiques thermophiles pour résoudre ces problèmes, notamment des bactéries lactiques thermophiles à texture courte.

Bien que l'ensemble de la littérature ayant trait aux fromages frais contenant des bactéries lactiques thermophiles ne précise jamais s'il s'agit de bactéries à texture courte ou non, il y a très peu de chance que de telles bactéries aient déjà été utilisées pour préparer industriellement des fromages frais centrifugés. En-effet, la plupart des espèces de bactéries lactiques thermophiles présentent la propriété de donner une certaine viscosité à leur milieu de culture (voir EP750043; EP699689; EP97111381.6 et EP97111379.0). Pour chaque espèce, quelques souches sont cependant dénuées de cette propriétée. Celles-ci sont appelées des bactéries à "texture courte".

La présente invention vise donc à utiliser avantageusement une classe mineure de bactéries lactiques thermophiles pour préparer un fromage frais ayant une teneur élevée en matière sèche.

### Résumé de l'invention

A cet effet, l'invention a trait à un procédé de préparation d'un fromage frais ayant une texture lisse et plus de 13% de matière sèche, dans lequel on fermente un lait par au moins une souche de bactérie lactique thermophile à texture courte jusqu'à atteindre un pH inférieur à 4,9 de sorte à obtenir un lait caillé, et on retire le lactosérum ainsi formé par centrifugation en continu à un débit supérieur à 500 l/h, le lait caillé n'étant jamais chauffé à plus de 50°C.

L'invention concerne également un fromage frais non-affiné, susceptible d'être obtenu selon le procédé de l'invention, ayant une texture lisse, et contenant plus de 13% de matière sèche et 10⁴-10¹⁰ cfu/g de bactéries lactiques thermophiles à texture courte, c'est à dire des bactéries qui, lorsqu'elles fermentent un lait pasteurisé contenant 10% d'une poudre de lait écrémé, 1% d'extraits de levure et 0,5% de glucose, à 40°C jusqu'à pH 4,9, donnent une viscosité au milieu qui est inférieur à 50 mPaxs à une vitesse de cisaillement de 290 s⁻¹.

### Description détaillée de l'invention

Contre toute attente, on a observé que l'on peut éviter de chauffer à 55-75°C un lait caillé avant d'en retirer le lactosérum. Les bactéries lactiques thermophiles à texture courte permettent d'obtenir un caillé, adapté à la centrifugation, présentant deux phases distinctes facilement séparables par centrifugation. En outre, le caillé n'encrasse pas la centrifugeuse.

On peut ainsi obtenir un fromage frais qui comprend tous les constituants majeurs du lait, ce qui donne un aliment particulièrement équilibré. En outre, ce fromage comprend des bactéries lactiques thermophiles vivantes. Il n'est donc pas indispensable d'enrichir ce fromage avec une culture de bactéries lactiques.

Par lait, on entend désigner, d'une part, un lait d'origine animal, tel que les laits de vache, de chèvre, de brebis, de bufflesse, de zébue, de jument, d'ânesse, de chamelle, etc. Ce lait peut être un lait à l'état natif, un lait reconstitué, un lait écrémé, ou un lait additionné de composés nécessaires à la croissance des bactéries, au traitement du lait, ou aux qualités finales du fromage frais, comme des matières grasses, de l'extrait de levure, de la peptone et/ou un surfactant, par exemple.

Le terme lait s'applique également à ce que l'on appelle communément un lait végétal, c'est à dire un extrait de matières végétales traitées ou non, telles que les légumineuses (soja, pois chiche, lentille, ect...) ou des oléagineuses (colza, soja, sésame, coton, etc...), extrait qui contient des protéines en solution ou en suspension colloïdale, coagulables par action chimique, par fermentation acide et/ou par la chaleur. Ces laits végétaux ont pu subir des traitements thermiques analogues à ceux des laits animaux. Ils ont pu subir également des traitements qui leur sont propres, tels que la décoloration, la désodorisation, et des traitements pour la suppression de goûts indésirables. Enfin, le mot lait désigne aussi des mélanges de laits animaux et de laits végétaux.

Ce lait doit être pasteurisé, c'est à dire doit avoir subi un traitement thermique et/ou par haute pression qui a inactivé tous les germes vivants. Ces techniques sont bien connues de l'homme du métier.

Le lait pasteurisé est ensuite inoculé avec un *inoculum* de bactéries lactiques thermophiles à texture courte. Bien que la littérature ayant trait aux bactéries lactiques thermophiles précise rarement s'il s'agit de bactéries à texture courte ou non, il y a très peu de chance que de telles bactéries soient des bactéries à texture courte. En-effet, la plupart des espèces de bactéries lactiques thermophiles présentent la propriété de donner une certaine viscosité à leur milieu de culture (voir EP750043; EP699689; EP97111381.6 et EP97111379.0). Pour chaque espèce, quelques souches sont cependant dénuées de cette propriétée. L'homme du métier est à même de cribler parmi les espèces de bactéries lactiques thermophiles, celles qui sont à texture courte, notamment à l'aide des tests décrits ci-après, par exemple.

Cet *inoculum* peut être une culture en phase exponentielle de croissance, ajoutée au lait pasteurisé à raison de 1 à 5% en poids, par exemple. Elle peut être aussi une culture congelée ou séchée que l'on ajoute directement au lait à raison de 0,01à 0,1% en poids, par exemple. Les techniques de préparation d'un *inoculum* bactérien sont bien connues de l'homme du métier. A titre d'indication, on peut citer les techniques décrites dans EP688864 (S.P.N.) et EP96201922.0 (S.P.N.)

On utilise au moins une souche de bactérie lactique thermophile à texture courte, c'est à dire une bactérie lactique, ayant une croissance optimale à 35-47°C, qui est capable de ne pas encrasser une centrifugeuse, lorsqu'elle est mise en oeuvre dans le procédé selon l'invention.

D'une manière générale, ces bactéries sont non-filantes, Ces espèces n'ont donc pas le pouvoir de former une matière gluante dans différents milieux comme le lait et le sérum. Le caractère non-filant du lait fermenté par une bactérie thermophile à texture courte peut être observé et déterminé comme décrit ci-après.
1. Par observation de la structure du lait acidifié en comparaison de celle du lait acidifié avec des cultures non-filantes. Le lait non-filant adhère aux parois d'un gobelet en verre, tandis que le lait filant est cohérent sur lui-même.
2. Un autre essai peut être effectué à la pipette. La pipette est trempée dans le lait acidifié qui est aspiré en quantité d'environ 2 ml, puis la pipette est retirée du lait. Le lait filant forme un fil entre la pipette et la surface liquide, tandis que le lait non-filant ne donne pas lieu à ce phénomène. Lorsque le liquide est relâché de la pipette, le lait non-filant forme des gouttes distinctes tout comme l'eau, alors que le lait filant forme des gouttes se terminant par de longs fils qui aboutissent au bec de la pipette.
3. Lorsqu'un tube à essai rempli à peu près jusqu'au tiers de sa hauteur est agité à l'aide d'un agitateur rotatif, le lait non-filant remonte sur la face intérieure de la paroi, alors que l'ascension du lait filant est pratiquement nulle.

Le caractère "texture courte" des bactéries lactiques thermophiles peut encore être déterminé à l'aide de paramètres de mesures rhéologiques. En effet, la texture d'un lait acidifié peut être caractérisée par sa viscosité. Quelques appareils commerciaux sont à même de déterminer ce paramètre, comme le rhéomètre Bohlin VOR (Bohlin GmbH, Allemagne). Conformément aux instructions du fournisseur, l'échantillon est placé entre un plateau et un cône tronqué de même diamètre (30 mm, angle de 5,4°, entrefer de 0,1 mm), puis l'échantillon est soumis à un gradient de vitesse de cisaillement rotatif continu qui le force à s'écouler. L'échantillon en résistant contre la déformation développe une force tangentielle appelée contrainte de cisaillement (shear stress). Cette contrainte qui est proportionnelle à la résistance à l'écoulement est mesurée par l'intermédiaire d'une barre de torsion. La viscosité de l'échantillon est alors déterminée, pour une vitesse de cisaillement donnée, par le rapport entre la contrainte de cisaillement (mPa) et la vitesse de cisaillement (s⁻¹).

Les nombreux essais de mesure rhéologique du caractère "texture courte" avec différentes souches thermophiles à texture courte, ont conduit à la définition suivante. Une bactérie lactique thermophile à texture courte peut être une bactérie thermophile qui lorsqu'elle fermente un milieu adapté à sa croissance à un pH optimal pour la production d'une forte viscosité, donne une viscosité au milieu qui est inférieur à 50 mPa x seconde à une vitesse de cisaillement de l'ordre de 290 s⁻¹.

Plus particulièrement, ce sont des bactéries qui, lorsqu'elles fermentent un lait pasteurisé contenant 10% d'une poudre de lait écrémé, 1% d'extraits de levure et 0,5% de glucose, à 40°C jusqu'à pH 4,9, donnent une viscosité au milieu qui est inférieure à 50 mPaxs à une vitesse de cisaillement de 290 s⁻¹, par exemple.

Parmi les bactéries lactiques thermophiles à texture courte, les meilleures résultats de mise en oeuvre du présent procédé ont été obtenus avec la souche *Lactobacillus johnsonii* CNCM 1-1225. D'autres souches peuvent également être utilisées, notamment les souches *Lactobacillus bulgaricus* YS4 et YL8 mentionnées à l'exemple 3 ci-après.

Il faut noter que la souche *Lactobacillus johnsonii* CNCM I-1225 présente des avantages qui lui sont propres. C'est une bactérie lactique probiotique qui a déjà été décrite dans EP577904. L'invention se destine donc tout particulièrement à utiliser des bactéries lactiques thermophiles probiotiques à texture courte, c'est à dire les bactéries lactiques qui sont capables d'adhérer aux cellules intestinales humaines, d'exclure des bactéries pathogènes sur des cellules intestinales humaines, et d'augmenter la propriété du corps humain à se défendre contre les pathogènes par exemple en augmentant les capacités de phagocytose des granulocytes issus du sang humain (J. of Dairy Science, 78, 491-197, 1995: capacité d'immunomodulation de la souche La-1 qui a été déposée à l'Institut Pasteur sous le numéro CNCM I-1225).

On fermente ensuite le lait jusqu'à la formation d'un coagulum à un pH inférieur à 4,9. Cette fermentation vise à faire passer la caséine d'une phase colloïdale à une phase précipitée, ce passage s'accompagnant de la formation d'un liquide appelé lactosérum ou petit-lait. Si le caillé est obtenu exclusivement par fermentation acide, il est préférable d'ajouter au lait, avant ou après pasteurisation, 50-300 ppm de chlorure de calcium de façon à assurer une contraction optimale du caillé, ce qui favorise d'autant par la suite la séparation du lactosérum.

La plupart du temps, on préfère obtenir un caillé par fermentation combinée à une action enzymatique. On peut donc ajouter au lait, après pasteurisation, 0,005 à 0,1% en volume/volume de présure. La présure est l'agent coagulant traditionnellement utilisé pour la coagulation du lait en vue de la fabrication de fromage. La dénomination "présure" est donnée à l'extrait coagulant provenant de caillettes de jeunes ruminants abattus avant sevrage. Elle contient en réalité deux fractions actives, l'une majeure constituée par la chymosine, et l'autre mineure par la pepsine.

Dans le cadre de la présente invention, on admettra que la présure englobe également les succédanés de présure de veau, comme les pepsines animales; les préparations coagulantes provenant du règne végétal extraites de l'artichaut, du chardon, de la ficine, du latex, du figuier, de la papaïne, par exemple; les préparations coagulantes provenant du règne microbien extraites des bactéries du genre *Bacillus* et *Pseudomonas,* et des moisissures appartenant aux *espèces Endothia parasitica, Mucor pusillus* et *Mucor miehei,* par exemple.

La fermentation du lait peut aussi être conduite en présence de présure et de chlorure de calcium dans les proportions indiquées ci-dessus, par exemple.

On retire ensuite le lactosérum par une centrifugation industrielle en continu à un débit supérieure à 500 l/h, de préférence supérieure à 5000 l/h. L'homme du métier connaît bien les différents systèmes de centrifugation appliqués au lait caillé. A titre d'indication, on peut citer les appareils décrits dans FR2361823; A. Eck, Le Fromage, Ed Lavoisier, Paris, 1984, I.S.B.N. 2-85206218-6, page 220-226; et R. Veisseyre, Technologie du Lait, Ed. La Maison Rustique, Paris, 1975, I.S.B.N. 2-7066-0018-7, pages 604-609.

Pour mettre en oeuvre la présente invention, le lait caillé n'est pas soumis à une température dépassant 50°C. Malgré cela, la perte en matière sèche dans le lactosérum est marginale. Le lactosérum, après centrifugation, contient en effet moins de 0,8% en poids de protéines, voire moins de 0,7%.

Dans une forme d'exécution particulière du procédé selon l'invention, après avoir séparé le lactosérum par centrifugation, on peut encore ajouter au caillé des arômes, des aromates, des épices et/ou des colorants, ou faire subir au caillé un foisonnement ou un ensemencement par des micro-organismes aptes à développer un arôme ou une consistance particulière, par exemple. En particulier, on mélange le caillé à 10-60% en poids d'un lait fermenté par des bactéries lactiques et/ou à 0,1-15% en poids de crème de lait, par exemple.

Dans une autre forme d'exécution particulière du procédé selon l'invention, on fermente un lait écrémé pasteurisé par une bactérie lactique thermophile à texture courte à 35-47°C jusqu'à pH 4-4,9, en présence de présure et de 50-300 ppm de chlorure de calcium, et on sépare le lactosérum par centrifugation à 30-50°C.

L'invention permet d'obtenir un fromage frais non-affiné ayant au moins 13% de matière sèche, 10⁴-10¹⁰ cfu/g de bactéries lactiques thermophiles à texture courte, et une consistance caractéristique de celle d'un fromage frais obtenu après centrifugation ou ultrafiltration d'un lait caillé par des bactéries lactiques mésophiles. Il a été observé qu'une teneur en matière sèche au moins supérieure à 13%, notamment 13-30%, donne un fromage lisse et onctueux qui se rapproche d'une crème. Par contre, un fromage frais ayant moins de 13% en matière sèche est plutôt liquide, d'une consistance proche de celle d'un yogourt liquide.

Ce fromage frais peut comprendre jusqu'à 10¹⁰ cfu/g de bactéries lactiques thermophiles à texture courte. Cette caractéristique le différencie clairement des fromages frais industriels obtenus après chauffage du caillé à 55-75°C comme décrit plus haut. En effet, il n'est pas possible d'atteindre une telle concentration en bactéries si l'on tente d'enrichir un fromage frais en bactéries lactiques, tout en respectant la valeur seuil de 13% en matière sèche.

Enfin, le fromage frais peut être aussi utilisé au cours de la fabrication d'une composition alimentaire plus complexe, notamment en tant que produit de fourrage, par exemple pour préparer des produits à base de céréales fourrés par du fromage frais selon l'invention. Le procédé décrit dans EP358983 (S.P.N.) est particulièrement indiqué pour préparer de tels produits, par exemple.

La présente invention est décrite plus en détail ci-après à l'aide du complément de description qui va suivre, qui se réfère à un test de mesure de la viscosité d'un lait acidifié, et à des exemples de préparation de fromages frais. Les pourcentages et les parties sont donnés en poids sauf indication contraire. Il va de soi, toutefois, que ces exemples sont donnés à titre d'illustration de l'objet de l'invention dont ils ne constituent en aucune manière une limitation.

### Test de mesure de la viscosité

On prépare un lait contenant 10% d'une poudre de lait écrémé, 1% d'extraits de levure et 0,5% de glucose, on le pasteurise à 95°C pendant 30 min, et on le fermente à 40°C avec une souche de bactérie lactique thermophile jusqu'à un pH de 4,9. On prélève 100 g d'échantillon dans un bécher, on le pré-cisaille à 300 tours/min pendant 60 secondes à l'aide d'un mélangeur (mélangeur Heidolph, Allemagne), on le conserve au réfrigérateur à 4°C pendant 1 heure, puis on le place à 15°C entre le plateau et le cône du rhéomètre Bohlin VOR (Bohlin GmbH, Allemagne; système de mesure CP5/30: cône de 30 mm de diamètre, angle du cône par rapport au plateau de 5,4°, entrefer cône-plateau de 0,1 mm).

L'échantillon est ensuite soumis à un gradient de vitesse de cisaillement, opéré par la rotation continue du plateau, qui le force à s'écouler entre le cône et le plateau. En résistant contre la déformation, l'échantillon développe alors une force tangentielle appelée contrainte de cisaillement (shear stress). Cette contrainte qui est proportionnelle à la résistance à l'écoulement est mesurée par l'intermédiaire d'une barre de torsion montée sur le cône qui est sensible à une force de torsion. La viscosité de l'échantillon est alors déterminée, pour une vitesse de cisaillement variant de 4,645 à 293,1 s⁻¹, par le rapport entre la contrainte de cisaillement (mPa) et la vitesse de cisaillement (s⁻¹).

Dans ces conditions, la souche *Lactobacillus johnsonii* CNCM I-1225 donne une viscosité au milieu de l'ordre de 30 mPaxs à une vitesse de cisaillement de 290 s⁻¹.

Pour comparaison, dans les mêmes conditions, les souches texturantes *Streptococcus thermophilus* CNCM I-1421, *Lactobacillus bulgaricus* CNCM I-1724, *Lactobacillus bulgaricus* CNCM I-800, *Lactobacillus bulgaricus* CNCM I-1198, mentionnées respectivement dans EP688864, EP638642, EP367918, EP564965, donnent une viscosité au milieu, respectivement, de l'ordre de 80, 100, 110 et 130 mPaxs à une vitesse de cisaillement de 290 s⁻¹.

### Exemple 1

On mélange 3% d'une pré-culture fraîche dans un milieu MRS de la souche *Lactobacillus johnsonii* CNCM I-1225 à du milieu MSK stérile comprenant du lait écrémé en poudre reconstitué à 10%, 0,1% d'extrait de levure commerciale, 0,5% de peptone et 0,1 % de Tween 80, puis on le fermente pendant 8 heures à 40°C, sans brassage.

On prépare ensuite une culture à grande échelle de cette souche à partir d'un lait écrémé, pasteurisé à 88°C pendant 2 min, comprenant 0% de matière grasse et 9% de matière sèche. Pour cela, on inocule ce lait à 40°C avec 5% de la pré-culture décrite ci-dessus, 150 ppm de chlorure de calcium et 10 ppm de présure de veau. On le fermente jusqu'à pH de 4,5 (16 heures). Le lait se sépare alors en deux phases distinctes constitués d'un caillé et d'un lactosérum. Puis on centrifuge directement le lait caillé, à 40°C, à 8500 rpm (rotations par min) dans une centrifugeuse Westfalia® (Allemagne). On récupère finalement un caillé présentant 15,5% de matière sèche et environ 5 x 10⁸ cfu/g. Le lactosérum contient environ 0,66% en poids de protéines.

Pour comparaison, on prépare traditionnellement un fromage frais, en fermentant à 23-27°C jusqu'à pH 4,4 le même lait écrémé, en présence de présure, avec deux souches commerciales de bactéries lactiques mésophiles. On chauffe le lait caillé à 60°C pendant 2 min, puis on le refroidit à 40°C. On centrifuge à 40°C et à 8500 rpm le lait caillé chauffé dans la centrifugeuse Westfalia®, et on récupère un caillé présentant 15,5% de matière sèche et moins de 10³ cfu/g de bactéries vivantes.

Les résultats montrent que l'on peut préparer un caillé comprenant 5 x 10⁸ cfu/g de bactéries lactiques thermophiles, sans perdre significativement de la matière protéique au cours de la centrifugation. En effet, le taux de matière sèche obtenu pour le fromage frais comparatif est identique à celui comprenant des bactéries thermophiles. Après refroidissement à 10°C, le caillé se présente sous la forme d'une pâte malléable, consommable à titre de fromage blanc maigre.

### Exemple 2

Le fromage frais obtenu à l'exemple 1 est mélangé à 20% de yoghourt commercial LC1® (HIRZ®, Suisse) qui comprend la souche *Lactobacillus johnsonii* CNCM I-1225, et 8% de crème de lait à 40% de matière grasse. On obtient une pâte malléable, consommable à titre de fromage blanc gras.

### Exemple 3

On prépare un fromage frais comme décrit dans l'exemple 1, à la différence près que l'on fermente le lait avec les souches *Lactobacillus bulgaricus* YS4 et YL8 à texture courte, c'est à dire des souches qui lorsqu'elles fermentent un lait pasteurisé contenant 10% d'une poudre de lait écrémé, 1% d'extraits de levure et 0,5% de glucose, à 40°C jusqu'à pH 4,9, donnent une viscosité au milieu qui est inférieur à 50 mPaxs à une vitesse de cisaillement de 290 s⁻¹.

Pour chaque fromage frais ainsi obtenu, les résultats sont similaires à ceux rencontrés à l'exemple 1.

## Revendications

1. Procédé de préparation d'un fromage frais ayant une texture lisse et plus de 13% de matière sèche, dans lequel on fermente un lait par au moins une souche de bactérie lactique thermophile à texture courte jusqu'à atteindre un pH inférieur à 4,9 de sorte à obtenir un lait caillé, et on retire le lactosérum ainsi formé par centrifugation en continu à un débit supérieur à 500 l/h, le lait caillé n'étant jamais chauffé à plus de 50°C.

2. Procédé selon la revendication 1, dans lequel la bactérie lactique thermophile à texture courte est une bactérie qui, lorsqu'elle fermente un milieu adapté à sa croissance à un pH optimale pour la production d'une forte viscosité, donne une viscosité au milieu qui est inférieure à 50 mPaxs à une vitesse de cisaillement de 290 s⁻¹.

3. Procédé selon la revendication 2, dans lequel la bactérie lactique thermophile à texture courte est une bactérie qui, lorsqu'elle fermente un lait pasteurisé contenant 10% d'une poudre de lait écrémé, 1% d'extraits de levure et 0,5% de glucose, à 40°C jusqu'à pH 4,9, donne une viscosité au milieu qui est inférieure à 50 mPaxs à une vitesse de cisaillement de 290 s⁻¹.

4. Procédé selon la revendication 3, dans lequel la bactérie lactique thermophile à texture courte est la souche *Lactobacillus johnsonii* CNCM I-1225.

5. Procédé selon la revendication 1, dans lequel le lait comprend 50-300 ppm de chlorure de calcium.

6. Procédé selon la revendication 1, dans lequel le lait comprend 0,005 à 0,1% en volume/volume de présure.

7. Procédé selon la revendication 1, dans lequel, après avoir retiré le lactosérum par centrifugation, on mélange le caillé à 10-60% en poids d'un lait fermenté par des bactéries lactiques.

8. Procédé selon la revendication 1, dans lequel, après avoir retiré le lactosérum par centrifugation, on mélange le caillé à 0,1-15% en poids de crème de lait.

9. Procédé selon l'une des revendications 1 à 6, dans lequel on fermente un lait écrémé par une bactérie lactique thermophile à texture courte à 35-47°C jusqu'à pH 4-4,9 et en présence de présure, et on sépare le lactosérum par centrifugation à 30-50°C.

10. Fromage frais non-affiné, susceptible d'être obtenu selon le procédé décrit à l'une des revendications 1 à 9, ayant une texture lisse, et contenant plus de 13% de matière sèche et 10⁴-10¹⁰ cfu/g de bactéries lactiques thermophiles à texture courte, c'est à dire des bactéries qui, lorsqu'elles fermentent un lait pasteurisé contenant 10% d'une poudre de lait écrémé, 1% d'extraits de levure et 0,5% de glucose, à 40°C jusqu'à pH 4,9, donnent une viscosité au milieu qui est inférieure à 50 mPaxs à une vitesse de cisaillement de 290 s⁻¹.

## Claims

1. Method for preparing a fromage frais having a smooth texture and more than 13% dry matter, wherein a milk is fermented by at least one thermophilic lactic bacterial strain with a short texture until a pH below 4.9 is reached so as to obtain a curdled milk, and the whey thus formed is withdrawn by centrifuging continuously at a rate above 500 l/h, the curdled milk never being heated above 50°C.

2. Method according to claim 1, wherein the thermophilic lactic bacterium with a short texture is a bacterium which, when it ferments a medium suited to its growth at an optimum pH for the production of a high viscosity, gives the medium a viscosity that is below 50 mPa.s at a shear rate of 290 s⁻¹.

3. Method according to claim 2, wherein the thermophilic lactic bacterium with a short texture is a bacterium which, when it ferments a pasteurized milk containing 10 % of a powdered skimmed milk, 1% yeast extracts and 0.5% glucose at 40°C to a pH of 4.9, gives the medium a viscosity that is below 50 mPa.s at a shear rate of 290 s⁻¹.

4. Method according to claim 3, wherein the thermophilic lactic bacterium with a short texture is the strain *Lactobacillus johnsonii* CNCM I-1225.

5. Method according to claim 1, wherein the milk contains 50-300 ppm calcium chloride.

6. Method according to claim 1, wherein the milk contains 0.005 to 0.1% volume/volume of rennin.

7. Method according to claim 1, wherein, after having withdrawn the whey by centrifuging, the curds are mixed with 10-60% by weight of a milk fermented by lactic bacteria.

8. Method according to claim 1, wherein, after having withdrawn the whey by centrifuging, the curds are mixed with 0.1-15% by weight of milk cream.

9. Method according to one of claims 1 to 6, wherein a skimmed milk is fermented with a thermophilic lactic bacterium with a short texture at 35-47°C to a pH of 4-4.9 in the presence of rennin, and the whey is separated by centrifuging at 30-50°C.

10. Unrefined fromage frais, capable of being obtained by the method described in one of claims 1 to 9, having a smooth texture and containing more than 13% dry matter and 10⁴-10¹⁰ cfu/g of thermophilic lactic bacteria with a short texture, namely bacteria which, when they ferment a pasteurized milk containing 10% of a powdered skimmed milk, 1% yeast extracts and 0.5% glucose, at 40°C to a pH of 4.9, give the medium a viscosity that is below 50 mPa.s at a shear rate of 290 s⁻¹.

## Patentansprüche

1. Verfahren zur Herstellung von Frischkäse mit glatter Textur und mehr als 13% Trockenmasse, bei dem man Milch mit mindestens einem thermophilen Milchsäurebakterienstamm mit kurzer Textur fermentiert, bis ein pH-Wert unter 4,9 erreicht wird, so dass man Dickmilch erhält, und die dabei gebildete Molke durch kontinuierliche Zentrifugation mit einem Durchsatz über 500 l/h abzieht, wobei die Dickmilch nie auf mehr als 50°C erhitzt wird.

2. Verfahren nach Anspruch 1, bei dem das thermophile Milchsäurebakterium mit kurzer Textur ein Bakterium ist, das, wenn es ein an sein Wachstum angepasstes Medium bei einem für die Erzeugung einer hohen Viskosität optimalen pH fermentiert, dem Medium eine Viskosität verleiht, die unter 50 mPa.s bei einer Schergeschwindigkeit von 290 s⁻¹ liegt.

3. Verfahren nach Anspruch 2, bei dem das thermophile Milchsäurebakterium mit kurzer Textur ein Bakterium ist, das, wenn es pasteurisierte Milch, die 10% Magermilchpulver, 1% Hefeextrakte und 0,5% Glucose enthält, bei 40°C bis zu pH 4,9 fermentiert, dem Medium eine Viskosität verleiht, die unter 50 mPa.s bei einer Schergeschwindigkeit von 290s⁻¹ liegt.

4. Verfahren nach Anspruch 3, bei dem das thermophile Milchsäurebakterium mit kurzer Textur der Stamm *Lactobacillus johnsonii* CNCM I-1225 ist.

5. Verfahren nach Anspruch 1, bei dem die Milch 50-300 ppm Calciumchlorid enthält.

6. Verfahren nach Anspruch 1, bei dem die Milch 0,005 bis 0,1% (V/V) Lab enthält.

7. Verfahren nach Anspruch 1, bei dem man nach Abziehen der Molke durch Zentrifugation die Dickmilch mit 10-60 Gew.-% durch Milchsäurebakterien fermentierter Milch mischt.

8. Verfahren nach Anspruch 1, bei dem man nach Abziehen der Molke durch Zentrifugation die Dickmilch mit 0,1-15 Gew.-% Milchsahne mischt.

9. Verfahren nach einem der Ansprüche 1 bis 6, bei dem man entrahmte Milch mit einem thermophilen Milchsäurebakterium mit kurzer Textur bei 35-47°C bis zu pH 4-4,9 und in Gegenwart von Lab fermentiert und die Molke durch Zentrifugation bei 30-50°C abtrennt.

10. Nicht ausgereifter Frischkäse, der in dem Verfahren nach einem der Ansprüche 1 bis 9 hergestellt werden kann, der eine glatte Textur besitzt und mehr als 13% Trockenmasse und 10⁴-10¹⁰ KBE/g thermophile Milchsäurebakterien mit kurzer Textur enthält, d.h. Bakterien, die, wenn sie pasteurisierte Milch, die 10% Magermilchpulver, 1% Hefeextrakt und 0,5% Glucose enthält, bei 40°C bis zu pH 4,9 fermentieren, dem Medium eine Viskosität verleihen, die unter 50 mPa.s bei einer Schergeschwindigkeit von 290s⁻¹ liegt.
